# EUROPÄISCHE PATENTANMELDUNG

(11) **EP 4 847 291 A1**
(43) Veröffentlichungstag der Anmeldung: **02.12.2026**
(21) Anmeldenummer: 26171819.1
(22) Anmeldetag: 13.04.2026
(51) Int. Cl.: B60K 35/28, B60W 50/12

(54) **VERFAHREN UND VORRICHTUNG ZUR FAHRZEUGSTEUERUNG MITTELS FAHRASSISTENZ, GERÄT SOWIE SPEICHERMEDIUM**

(30) Priorität: 26.05.2025 CN 202510691390
(71) Anmelder: ZF Friedrichshafen AG, 88046 Friedrichshafen (DE)
(72) Erfinder: Wang, Xiandong, 88046 Friedrichshafen (DE); Luo, Zheng, 88046 Friedrichshafen (DE)
(74) Vertreter: ZF Friedrichshafen AG

(57) **Zusammenfassung**

Ausführungsbeispiele der vorliegenden Anmeldung stellen ein Verfahren und eine Vorrichtung zur Fahrzeugsteuerung mittels Fahrassistenz, ein Gerät sowie ein Speichermedium bereit. Das Verfahren umfasst: Erfassen von Fahrinformationen eines Fahrzeugs und Straßeninformationen aus der Umgebung des Fahrzeugs, wobei die Fahrinformationen einen Fahrzustand des Fahrzeugs charakterisieren, und wobei zu den Straßeninformationen zumindest eins von der Straßenkrümmung und dem Haftungskoeffizienten der Straßenoberfläche gehört; Bestimmen einer ersten Steuerinformation und einer zweiten Steuerinformation einer Eingabevorrichtung im Fahrzeug basierend auf den Fahrinformationen und den Straßeninformationen, wobei die erste Steuerinformation eine obere Grenze für eine durch einen Benutzer an der Eingabevorrichtung ausführbare Betätigung charakterisiert, wobei die zweite Steuerinformation eine dem Benutzer empfohlene Betätigung der Eingabevorrichtung charakterisiert, und wobei zu der Eingabevorrichtung zumindest eins von einem Lenkrad, einem Fahrpedal und einem Bremspedal gehört; und Bestimmen einer Ziel-Steuerinformation der Eingabevorrichtung basierend auf der ersten Steuerinformation und der zweiten Steuerinformation der Eingabevorrichtung, wobei die Ziel-Steuerinformation eine optimale Betätigung der Eingabevorrichtung durch den Benutzer charakterisiert. Mit diesem Verfahren wird die Steuerpräzision des Fahrzeugs erhöht und das Fahrerlebnis des Benutzers verbessert.

## Beschreibung

### Technisches Gebiet

Die vorliegende Anmeldung betrifft das technische Gebiet der künstlichen Intelligenz, insbesondere ein Verfahren und eine Vorrichtung zur Fahrzeugsteuerung mittels Fahrassistenz, ein Gerät sowie ein Speichermedium.

### Stand der Technik

Mit der Verbesserung des Lebensstandards finden Fahrzeuge eine immer breitere Anwendung im täglichen Leben und erleichtern unser Leben erheblich. Allerdings ist das Fahrniveau von Mensch zu Mensch unterschiedlich, und viele Personen sind nicht in der Lage, ein Fahrzeug präzise zu steuern, wodurch eine instabile Fahrzeugbewegung verursacht und das Fahrerlebnis beeinflusst wird.

Daher besteht ein Bedarf, Benutzern eine Fahrassistenzfunktion zur Verfügung zu stellen, um ihnen bei einer präzisen und effektiven Steuerung des Fahrzeugs zu helfen, die Fahrstabilität des Fahrzeugs zu erhöhen und das Fahrerlebnis der Benutzer zu verbessern.

### Inhalt der Erfindung

Ausführungsbeispiele der vorliegenden Anmeldung stellen ein Verfahren und eine Vorrichtung zur Fahrzeugsteuerung mittels Fahrassistenz, ein Gerät sowie ein Speichermedium bereit, um die Steuerpräzision eines Fahrzeugs zu erhöhen und das Fahrerlebnis eines Benutzers zu verbessern.

In einem ersten Aspekt stellt ein Ausführungsbeispiel der vorliegenden Anmeldung ein Verfahren zur Fahrzeugsteuerung mittels Fahrassistenz bereit, das umfasst:
Erfassen von Fahrinformationen eines Fahrzeugs und Straßeninformationen aus der Umgebung des Fahrzeugs, wobei die Fahrinformationen einen Fahrzustand des Fahrzeugs charakterisieren, und wobei zu den Straßeninformationen zumindest eins von der Straßenkrümmung und dem Haftungskoeffizienten der Straßenoberfläche gehört;
Bestimmen einer ersten Steuerinformation und einer zweiten Steuerinformation einer Eingabevorrichtung im Fahrzeug basierend auf den Fahrinformationen und den Straßeninformationen, wobei die erste Steuerinformation eine obere Grenze für eine durch einen Benutzer an der Eingabevorrichtung ausführbare Betätigung charakterisiert, wobei die zweite Steuerinformation eine dem Benutzer empfohlene Betätigung der Eingabevorrichtung charakterisiert, und wobei zu der Eingabevorrichtung zumindest eins von einem Lenkrad, einem Fahrpedal und einem Bremspedal gehört; und
Bestimmen einer Ziel-Steuerinformation der Eingabevorrichtung basierend auf der ersten Steuerinformation und der zweiten Steuerinformation der Eingabevorrichtung, wobei die Ziel-Steuerinformation eine optimale Betätigung der Eingabevorrichtung durch den Benutzer charakterisiert, und wobei die Ziel-Steuerinformation dazu dient, den Benutzer bei der Betätigung der Eingabevorrichtung im Fahrzeug anzuleiten.

In einem zweiten Aspekt stellt ein Ausführungsbeispiel der vorliegenden Anmeldung eine Vorrichtung zur Fahrzeugsteuerung mittels Fahrassistenz bereit, die umfasst:
eine Erfassungseinheit, zum Erfassen von Fahrinformationen eines Fahrzeugs und Straßeninformationen aus der Umgebung des Fahrzeugs, wobei die Fahrinformationen einen Fahrzustand des Fahrzeugs charakterisieren, und wobei zu den Straßeninformationen zumindest eins von der Straßenkrümmung und dem Haftungskoeffizienten der Straßenoberfläche gehört;
eine Bestimmungseinheit, zum Bestimmen einer ersten Steuerinformation und einer zweiten Steuerinformation einer Eingabevorrichtung im Fahrzeug basierend auf den Fahrinformationen und den Straßeninformationen, wobei die erste Steuerinformation eine obere Grenze für eine durch einen Benutzer an der Eingabevorrichtung ausführbare Betätigung charakterisiert, wobei die zweite Steuerinformation eine dem Benutzer empfohlene Betätigung der Eingabevorrichtung charakterisiert, und wobei zu der Eingabevorrichtung zumindest eins von einem Lenkrad, einem Fahrpedal und einem Bremspedal gehört; und
eine Steuereinheit, zum Bestimmen einer Ziel-Steuerinformation der Eingabevorrichtung basierend auf der ersten Steuerinformation und der zweiten Steuerinformation der Eingabevorrichtung, wobei die Ziel-Steuerinformation eine optimale Betätigung der Eingabevorrichtung durch den Benutzer charakterisiert, und wobei die Ziel-Steuerinformation dazu dient, den Benutzer bei der Betätigung der Eingabevorrichtung im Fahrzeug anzuleiten.

In einem dritten Aspekt stellt ein Ausführungsbeispiel der vorliegenden Anmeldung ein elektronisches Gerät bereit, das einen Speicher und einen Prozessor umfasst,
wobei in dem Speicher computerausführbare Anweisungen gespeichert sind,
und wobei der Prozessor die in dem Speicher gespeicherten computerausführbaren Anweisungen ausführt, um zu bewirken, dass der Prozessor ein Verfahren gemäß dem ersten Aspekt durchführt.

In einem vierten Aspekt stellt ein Ausführungsbeispiel der vorliegenden Anmeldung ein computerlesbares Speichermedium bereit, auf dem computerausführbare Anweisungen gespeichert sind, die bei ihrem Ausführen durch einen Prozessor zur Implementierung eines Verfahrens gemäß dem ersten Aspekt verwendet werden.

In einem fünften Aspekt stellt ein Ausführungsbeispiel der vorliegenden Anmeldung ein Computerprogrammprodukt bereit, das ein Computerprogramm umfasst, wobei das Computerprogramm bei seinem Ausführen durch einen Prozessor ein Verfahren gemäß dem ersten Aspekt implementiert.

Bei dem Verfahren und der Vorrichtung zur Fahrzeugsteuerung mittels Fahrassistenz, dem Gerät sowie dem Speichermedium gemäß den Ausführungsbeispielen der vorliegenden Anmeldung lassen sich durch das Erfassen von den Fahrinformationen des Fahrzeugs und den Straßeninformationen aus der Umgebung des Fahrzeugs ein aktueller Fahrzustand des Fahrzeugs sowie Informationen wie die Krümmung einer aktuell befahrenen Straße und der Haftungskoeffizient der Straßenoberfläche erhalten. Dadurch wird eine gezielte assistierte Steuerung des Fahrzeugs basierend auf den aktuellen Fahrinformationen und Straßeninformationen durchgeführt. Basierend auf den Fahrinformationen und den Straßeninformationen können die erste Steuerinformation und die zweite Steuerinformation der Eingabevorrichtung im Fahrzeug bestimmt werden, wobei die erste Steuerinformation eine obere Grenze für eine durch den Benutzer an der Eingabevorrichtung ausführbare Betätigung charakterisiert, wobei die zweite Steuerinformation eine dem Benutzer empfohlene Betätigung der Eingabevorrichtung charakterisiert, und wobei zu der Eingabevorrichtung zumindest eins von einem Lenkrad, einem Fahrpedal und einem Bremspedal gehört. Das heißt, basierend auf der tatsächlichen Fahrsituation können die erste Steuerinformation wie ein maximal zulässiger Drehwinkel des Lenkrads sowie die zweite Steuerinformation wie ein empfohlener Drehwinkel des Lenkrads bestimmt werden. Durch Kombinieren der beiden Steuerinformationen kann eine optimale Steuerinformation der Eingabevorrichtung, nämlich die Ziel-Steuerinformation, bestimmt werden. Basierend auf der Ziel-Steuerinformation wird ein Fahrer bei der Betätigung der Eingabevorrichtung angeleitet, um dem Fahrer dabei zu helfen, das Fahrzeug präzise zu steuern, die Fahrstabilität des Fahrzeugs zu erhöhen und das Fahrerlebnis zu verbessern.

### Kurzbeschreibung der Zeichnungen

Die Zeichnungen hierin sind in die Beschreibung aufgenommen und bilden einen Teil dieser Beschreibung. Dabei zeigen sie die der vorliegenden Anmeldung entsprechenden Ausführungsbeispiele und dienen zusammen mit der Beschreibung zur Erläuterung der Prinzipien der vorliegenden Anmeldung.
Fig. 1 zeigt ein schematisches Ablaufdiagramm eines Verfahrens zur Fahrzeugsteuerung mittels Fahrassistenz gemäß einem Ausführungsbeispiel der vorliegenden Anmeldung;
Fig. 2 zeigt ein schematisches Ablaufdiagramm eines Verfahrens zur Fahrzeugsteuerung mittels Fahrassistenz gemäß einem Ausführungsbeispiel der vorliegenden Anmeldung;
Fig. 3 zeigt ein schematisches Ablaufdiagramm eines Verfahrens zur Fahrzeugsteuerung mittels Fahrassistenz gemäß einem Ausführungsbeispiel der vorliegenden Anmeldung;
Fig. 4 zeigt eine schematische Darstellung zur Informationsanzeige auf einem Armaturenbrett gemäß einem Ausführungsbeispiel der vorliegenden Anmeldung;
Fig. 5 zeigt eine schematische Strukturdarstellung einer Vorrichtung zur Fahrzeugsteuerung mittels Fahrassistenz gemäß einem Ausführungsbeispiel der vorliegenden Anmeldung; und
Fig. 6 zeigt eine schematische Strukturdarstellung eines elektronischen Geräts gemäß einem Ausführungsbeispiel der vorliegenden Anmeldung.

In den obigen Zeichnungen sind konkrete Ausführungsbeispiele der vorliegenden Anmeldung dargestellt. Im Folgenden werden diese noch näher beschrieben. Die Zeichnungen und Texte hierin dienen nicht dazu, den Umfang der Idee der vorliegenden Anmeldung in irgendeiner Weise einzuschränken, sondern dazu, den Fachleuten auf diesem Gebiet den Kontext der vorliegenden Anmeldung unter Bezugnahme auf spezifische Ausführungsbeispiele der vorliegenden Anmeldung zu erläutern.

### Ausführliche Ausführungsformen

Um die Aufgaben, die technischen Lösungen und die Vorteile der vorliegenden Anmeldung deutlicher zu machen, werden die Ausführungsbeispiele der vorliegenden Anmeldung nachstehend unter Bezugnahme auf die beigefügten Zeichnungen näher beschrieben.

Es sollte verstanden werden, dass die beschriebenen Ausführungsbeispiele nur einige Ausführungsbeispiele anstatt sämtlicher Ausführungsbeispiele der vorliegenden Anmeldung darstellen. Alle anderen Ausführungsbeispiele, die vom Durchschnittsfachmann anhand der Ausführungsbeispiele der vorliegenden Anmeldung ohne erfinderischen Aufwand erhalten werden, gehören ebenfalls zu dem Schutzumfang der vorliegenden Anmeldung.

In der nachfolgenden Beschreibung, die sich auf die Zeichnungen bezieht, bezeichnen die gleichen Bezugszeichen in den verschiedenen Zeichnungen die gleichen oder ähnliche Elemente, sofern nichts anderes angegeben ist. Die in den folgenden beispielhaften Ausführungsbeispielen beschriebenen Ausführungsformen stellen nicht alle mit der vorliegenden Anmeldung übereinstimmenden Ausführungsformen dar. Vielmehr handelt es sich dabei lediglich um Beispiele für die Einrichtungen und Verfahren, die mit einigen in den beigefügten Ansprüchen beschriebenen Aspekten der vorliegenden Anmeldung übereinstimmen.

Es ist zu verstehen, dass in der Beschreibung der vorliegenden Anmeldung die Begriffe "erste", "zweite", "dritte" und dergleichen nur zur Unterscheidung ähnlicher Objekte verwendet werden, ohne dass sie zur Beschreibung einer bestimmten Reihenfolge oder Sequenz verwendet werden müssen und als implizite oder explizite Angabe für die relative Wichtigkeit verstanden werden. Für den Durchschnittsfachmann kann die spezifische Bedeutung der oben genannten Begriffe in der vorliegenden Anmeldung im Hinblick auf die jeweiligen Umstände verstanden werden. Des Weiteren bezieht sich der Begriff "mehrere" in der Beschreibung der vorliegenden Anmeldung, sofern nicht anders angegeben, auf eine Anzahl von zwei oder mehr als zwei. "Und/oder" beschreibt eine Zuordnungsbeziehung zwischen zugehörigen Objekten. Dies gibt an, dass drei Arten von Beziehungen existieren können. Beispielsweise kann A und/oder B angeben: das ausschließliche Vorhandensein von A, das gleichzeitige Vorhandensein von A und B, und das ausschließliche Vorhandensein von B. Das Zeichen "/" gibt im Allgemeinen an, dass die zugehörigen Objekte davor und danach in einer "oder"-Beziehung stehen.

Es ist darauf hinzuweisen, dass aufgrund der Beschränkung der Textlänge nicht alle optionalen Ausführungsformen in der Beschreibung der vorliegenden Anmeldung erschöpfend aufgeführt sind. Nach dem Lesen der Beschreibung der vorliegenden Anmeldung soll es für den Fachmann denkbar sein, dass optionale Ausführungsformen durch beliebige Kombinationen der technischen Merkmale gebildet werden können, solange die technischen Merkmale untereinander nicht im Widerspruch stehen. Nachfolgend werden die jeweiligen Ausführungsbeispiele näher erläutert.

Beim Fahren eines Fahrzeugs führt eine unzureichende Fahrfähigkeit eines Benutzers häufig zu einer geringeren Fahrstabilität des Fahrzeugs, wodurch das Fahrerlebnis beeinflusst wird. Wenn der Benutzer beispielsweise das Lenkrad zur Drehung um einen zu großen Winkel steuert, kann dies zu einer instabilen Fahrzeugbewegung führen, oder wenn der Benutzer das Fahrpedal oder das Bremspedal zu stark oder zu schwach tritt, kann dies zu einer ungleichmäßigen Fahrbewegung des Fahrzeugs führen.

Um das Fahrerlebnis des Benutzers zu verbessern, besteht ein Bedarf, dem Benutzer eine Fahrassistenzfunktion zur Verfügung zu stellen. Dabei kann die Fahrassistenzfunktion beispielsweise in bestimmten Szenarien die Kontrolle über das Fahrzeug vom Benutzer übernehmen, etwa indem sie anstelle des Benutzers das Lenkrad dreht, um zu vermeiden, dass ein zu starker Drehwinkel durch den Benutzer die Fahrstabilität des Fahrzeugs beeinflusst. Ein solcher Ansatz berücksichtigt jedoch nicht das Fahrgefühl des Benutzers und kann lediglich die Stabilität des Fahrzeugs aufrechterhalten. Er verbessert nicht die Fahrfähigkeit des Fahrers und weist eine geringe Flexibilität bei der Fahrzeugsteuerung auf. Es ist unmöglich, eine präzise Fahrzeugsteuerung entsprechend den tatsächlichen Anforderungen des Benutzers zu erreichen.

Die vorliegende Anmeldung stellt ein Verfahren und eine Vorrichtung zur Fahrzeugsteuerung mittels Fahrassistenz, ein Gerät sowie ein Speichermedium bereit, um die oben genannten technischen Probleme im Stande der Technik zu lösen.

Im Folgenden wird anhand konkreter Ausführungsbeispiele detailliert beschrieben, wie die technische Lösung der vorliegenden Anmeldung aussieht und wie die technische Lösung der vorliegenden Anmeldung die oben genannten technischen Probleme löst. Die folgenden konkreten Ausführungsbeispiele können miteinander kombiniert werden, und in einigen Ausführungsbeispielen werden gleiche oder ähnliche Konzepte oder Prozesse möglicherweise nicht wiederholt. Die Ausführungsbeispiele der vorliegenden Anmeldung werden nachstehend in Verbindung mit den beigefügten Zeichnungen beschrieben.

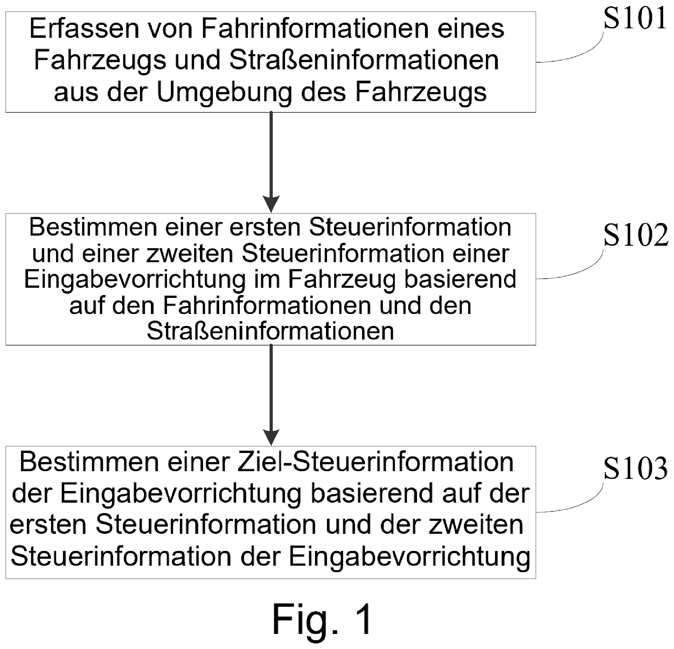

Fig. 1 zeigt ein schematisches Ablaufdiagramm eines Verfahrens zur Fahrzeugsteuerung mittels Fahrassistenz gemäß einem Ausführungsbeispiel der vorliegenden Anmeldung. Dieses Verfahren kann durch eine Vorrichtung zur Fahrzeugsteuerung mittels Fahrassistenz ausgeführt werden. Wie in Fig. 1 gezeigt, umfasst das Verfahren die folgenden Schritte:
S101: Erfassen von Fahrinformationen eines Fahrzeugs und Straßeninformationen aus der Umgebung des Fahrzeugs, wobei die Fahrinformationen einen Fahrzustand des Fahrzeugs charakterisieren, und wobei zu den Straßeninformationen zumindest eins von der Straßenkrümmung und dem Haftungskoeffizienten der Straßenoberfläche gehört.

Beispielhaft sind in dem Fahrzeug unterschiedliche Sensoren angebracht. Durch einen Bordsensoren, einen Zustandsschätzer und ähnliche Vorrichtungen im Fahrzeug können während der Fahrt Fahrinformationen des Fahrzeugs und Straßeninformationen aus der Umgebung des Fahrzeugs in Echtzeit oder periodisch aufgenommen werden. Die Fahrinformationen charakterisieren den Fahrzustand des Fahrzeugs. Beispielsweise können die Fahrinformationen den aktuellen Fahrmodus des Fahrzeugs, die Fahrzeuggeschwindigkeit, die Beschleunigung, die Giergeschwindigkeit und den Schwimmwinkel usw. umfassen. Zu den Fahrmodi können unter anderem der Eco-Modus, der Normalmodus und der Sportmodus gehören. Die Straßeninformationen können beispielsweise die Straßenkrümmung und den Haftungskoeffizienten der Straßenoberfläche umfassen. Die Krümmung gibt den Krümmungsgrad der Straße an, und der Haftungskoeffizient der Straßenoberfläche kann beispielsweise die Glätte der Straßenoberfläche sowie die Antriebsfähigkeit angeben.

Ferner können Benutzerbetätigungen in Echtzeit oder periodisch erfasst werden. Dabei kann es sich bei dem Benutzer um den Fahrer und bei diesen Betätigungen um Handlungen oder Befehle des Benutzers in Bezug auf das Fahrzeug handeln. Beispielsweise kann der Benutzer Betätigungen wie Gangschaltung, Aktivierung der Blinkleuchte sowie Ausgabe von Sprachbefehlen in Bezug auf das Fahrzeug vornehmen.

S102: Bestimmen einer ersten Steuerinformation und einer zweiten Steuerinformation einer Eingabevorrichtung im Fahrzeug basierend auf den Fahrinformationen und den Straßeninformationen, wobei die erste Steuerinformation eine obere Grenze für eine durch einen Benutzer an der Eingabevorrichtung ausführbare Betätigung charakterisiert, wobei die zweite Steuerinformation eine dem Benutzer empfohlene Betätigung der Eingabevorrichtung charakterisiert, und wobei zu der Eingabevorrichtung zumindest eins von einem Lenkrad, einem Fahrpedal und einem Bremspedal gehört.

Beispielhaft sind in dem Fahrzeug verschiedene Eingabevorrichtungen angebracht. Eine Eingabevorrichtung bezeichnet eine Vorrichtung, die auf Betätigungen oder Befehle des Benutzers reagieren kann. Beispielsweise kann es sich bei der Eingabevorrichtung um das Lenkrad, das Fahrpedal oder das Bremspedal usw. handeln. Der Benutzer kann durch Betätigen der Eingabevorrichtung das Fahrzeug steuern. Die durch den Benutzer an der Eingabevorrichtung ausgeführten Betätigungen können als Steuerinformation des Benutzers in Bezug auf die Eingabevorrichtung bestimmt werden. Für unterschiedliche Eingabevorrichtungen kann der Benutzer unterschiedliche Betätigungen ausführen. Die Eingabevorrichtung empfängt die Steuerinformation des Benutzers und ermöglicht eine Steuerung des Fahrzeugs.

Um dem Benutzer eine präzisere Ausgabe von Steuerinformationen zu ermöglichen, kann dem Benutzer eine Fahrassistenzfunktion zur Verfügung gestellt werden. Dadurch wird der Benutzer darauf hingewiesen, welche Steuerinformationen ausgegeben werden sollen. Das heißt, die Fahrassistenz kann dazu verwendet werden, dem Benutzer bei dem Bestimmen, wie das Fahrzeug zu steuern ist, zu helfen.

Bei der Fahrassistenz des Fahrzeugs werden zunächst aktuelle Fahrinformationen und Straßeninformationen erfasst. Für jede Eingabevorrichtung können basierend auf den Fahrinformationen und den Straßeninformationen jeweils eine erste Steuerinformation und eine zweite Steuerinformation dieser Eingabevorrichtung bestimmt werden. Die erste Steuerinformation charakterisiert eine obere Grenze für eine durch den Benutzer an der Eingabevorrichtung ausführbare Betätigung zum aktuellen Zeitpunkt, und die zweite Steuerinformation charakterisiert eine dem Benutzer aktuell empfohlene Betätigung der Eingabevorrichtung. Das heißt, die erste Steuerinformation stellt einen aktuell zulässigen Maximalwert dar, und die zweite Steuerinformation stellt einen aktuell empfohlenen Wert dar. Wenn es sich bei der Eingabevorrichtung beispielsweise um das Lenkrad handelt, kann die erste Steuerinformation einen aktuell maximal zulässigen Drehwinkel des Lenkrads darstellen, und die zweite Steuerinformation kann einen empfohlenen Drehwinkel des Lenkrads darstellen. Wenn es sich bei der Eingabevorrichtung um das Fahrpedal handelt, kann die erste Steuerinformation eine aktuell maximal zulässige Stellung des Fahrpedals darstellen, und die zweite Steuerinformation kann eine empfohlene Stellung des Fahrpedals darstellen. Wenn es sich bei der Eingabevorrichtung um das Bremspedal handelt, kann die erste Steuerinformation eine aktuell maximal zulässige Stellung des Bremspedals darstellen, und die zweite Steuerinformation kann eine empfohlene Stellung des Bremspedals darstellen.

In diesem Ausführungsbeispiel wird die Reihenfolge zur Bestimmung der ersten Steuerinformation und der zweiten Steuerinformation nicht speziell eingeschränkt. Beispielsweise ist es möglich, zunächst die erste Steuerinformation der Eingabevorrichtung basierend auf den Fahrinformationen und den Straßeninformationen zu bestimmen, und anschließend die zweite Steuerinformation der Eingabevorrichtung basierend auf den Fahrinformationen und den Straßeninformationen zu bestimmen. Es ist möglich, eine Berechnungsformel für die erste Steuerinformation und eine Berechnungsformel für die zweite Steuerinformation im Voraus festzulegen. Durch Einsetzen der Fahrinformationen und der Straßeninformationen in die Berechnungsformeln können jeweils die erste Steuerinformation und die zweite Steuerinformation erhalten werden. In diesem Ausführungsbeispiel werden die vorgegebenen Berechnungsformeln nicht speziell eingeschränkt. Wenn es sich bei der Eingabevorrichtung beispielsweise um das Lenkrad handelt, gilt: je kleiner die Straßenkrümmung ist, desto kleiner ist die erste Steuerinformation.

S103: Bestimmen einer Ziel-Steuerinformation der Eingabevorrichtung basierend auf der ersten Steuerinformation und der zweiten Steuerinformation der Eingabevorrichtung, wobei die Ziel-Steuerinformation eine optimale Betätigung der Eingabevorrichtung durch den Benutzer charakterisiert, und wobei die Ziel-Steuerinformation dazu dient, den Benutzer bei der Betätigung der Eingabevorrichtung im Fahrzeug anzuleiten.

Beispielhaft werden für jede Eingabevorrichtung nach dem Erhalten der ersten Steuerinformation und der zweiten Steuerinformation der Eingabevorrichtung die erste Steuerinformation und die zweite Steuerinformation miteinander kombiniert, um die Ziel-Steuerinformation der Eingabevorrichtung zu erhalten. Die Ziel-Steuerinformation charakterisiert eine optimale Betätigung der Eingabevorrichtung durch den Benutzer und kann dazu verwendet werden, den Benutzer bei der Betätigung der Eingabevorrichtung im Fahrzeug anzuleiten, das heißt, den Benutzer beim Fahren zu unterstützen. Beispielsweise kann der Mittelwert aus der ersten und der zweiten Steuerinformation als Ziel-Steuerinformation herangezogen werden.

Die Ziel-Steuerinformation charakterisiert eine aktuell optimale Fahrbetätigung. Der Benutzer kann die Eingabevorrichtung entsprechend der Ziel-Steuerinformation betätigen, so dass die durch den Benutzer tatsächlich ausgegebene Steuerinformation der Ziel-Steuerinformation entspricht. Wenn es sich bei der Eingabevorrichtung beispielsweise um das Lenkrad handelt, bezieht sich die Ziel-Steuerinformation auf einen optimalen Drehwinkel des Lenkrads. Bei einem optimalen Drehwinkel des Lenkrads von 30° nach links kann der Benutzer das Lenkrad also um 30° nach links drehen, um eine präzise Steuerung des Fahrzeugs zu erreichen.

Das Fahrzeug kann dem Benutzer die Ziel-Steuerinformation anzeigen. Beispielsweise kann die Ziel-Steuerinformation auf einer Konsolenanzeige dargestellt werden, so dass sie als Referenz für den Benutzer dient. Durch das Bestimmen der Ziel-Steuerinformation kann das tägliche Fahren des Benutzers angeleitet und die Fahrfähigkeit des Benutzers verbessert werden.

In diesem Ausführungsbeispiel umfasst das Bestimmen einer Ziel-Steuerinformation der Eingabevorrichtung basierend auf der ersten Steuerinformation und der zweiten Steuerinformation der Eingabevorrichtung: Bestimmen eines Minimalwerts von der ersten Steuerinformation und der zweiten Steuerinformation der Eingabevorrichtung als die Ziel-Steuerinformation der Eingabevorrichtung.

Insbesondere stellt die erste Steuerinformation einen aktuell zulässigen Maximalwert dar, und die Ziel-Steuerinformation soll kleiner oder gleich der ersten Steuerinformation sein. Die zweite Steuerinformation stellt einen aktuell empfohlenen Wert dar und kann als aktueller optimaler Wert verwendet werden. Da jedoch die zweite Steuerinformation größer als die erste Steuerinformation sein kann, werden die erste Steuerinformation und die zweite Steuerinformation miteinander verglichen, und der Minimalwert von der ersten Steuerinformation und der zweiten Steuerinformation wird als Ziel-Steuerinformation bestimmt.

Wenn beispielsweise im Fall der Eingabevorrichtung als Lenkrad die erste Steuerinformation mit δₘₐₓ, die zweite Steuerinformation mit δ_{A} und die Ziel-Steuerinformation mit δₒₚₜ bezeichnet wird, gilt dann: δₒₚₜ = min (δₘₐₓ, δ_{A}). Wenn im Fall der Eingabevorrichtung als Fahrpedal die erste Steuerinformation mit PDₘₐₓ ,die zweite Steuerinformation mit PD_{A} und die Ziel-Steuerinformation mit PDₒₚₜ bezeichnet wird,gilt dann: PDₒₚₜ = min(PDₘₐₓ, PD_{A}). Wenn im Fall der Eingabevorrichtung als Bremspedal die erste Steuerinformation PBₘₐₓ, die zweite Steuerinformation mit PB_{A} und die Ziel-Steuerinformation mit PBₒₚₜ bezeichnet wird,gilt dann: PBₒₚₜ = min (PBₘₐₓ, PB_{A}).

Der Vorteil dieser Vorgehensweise besteht darin, dass durch das Bestimmen des Minimalwerts von der ersten Steuerinformation und der zweiten Steuerinformation der Eingabevorrichtung sichergestellt wird, dass innerhalb eines zulässigen Bereichs dem Benutzer ein optimaler Wert empfohlen wird, um die Steuerpräzision des Fahrzeugs zu erhöhen und eine stabile Fahrbewegung des Fahrzeugs zu ermöglichen.

Bei dem Verfahren zur Fahrzeugsteuerung mittels Fahrassistenz gemäß den Ausführungsbeispielen der vorliegenden Anmeldung lassen sich durch das Erfassen von den Fahrinformationen des Fahrzeugs und den Straßeninformationen aus der Umgebung des Fahrzeugs ein aktueller Fahrzustand des Fahrzeugs sowie Informationen wie die Krümmung einer aktuell befahrenen Straße und der Haftungskoeffizient der Straßenoberfläche erhalten. Dadurch wird eine gezielte assistierte Steuerung des Fahrzeugs basierend auf den aktuellen Fahrinformationen und Straßeninformationen durchgeführt. Basierend auf den Fahrinformationen und den Straßeninformationen können die erste Steuerinformation und die zweite Steuerinformation der Eingabevorrichtung im Fahrzeug bestimmt werden, wobei die erste Steuerinformation eine obere Grenze für eine durch den Benutzer an der Eingabevorrichtung ausführbare Betätigung charakterisiert, wobei die zweite Steuerinformation eine dem Benutzer empfohlene Betätigung der Eingabevorrichtung charakterisiert, und wobei zu der Eingabevorrichtung zumindest eins von einem Lenkrad, einem Fahrpedal und einem Bremspedal gehört. Das heißt, basierend auf der tatsächlichen Fahrsituation können die erste Steuerinformation wie ein maximal zulässiger Drehwinkel des Lenkrads sowie die zweite Steuerinformation wie ein empfohlener Drehwinkel des Lenkrads bestimmt werden. Durch Kombinieren der beiden Steuerinformationen kann eine optimale Steuerinformation der Eingabevorrichtung, nämlich die Ziel-Steuerinformation, bestimmt werden. Basierend auf der Ziel-Steuerinformation wird ein Fahrer bei der Betätigung der Eingabevorrichtung angeleitet, um dem Fahrer dabei zu helfen, das Fahrzeug präzise zu steuern, die Fahrstabilität des Fahrzeugs zu erhöhen und das Fahrerlebnis zu verbessern.

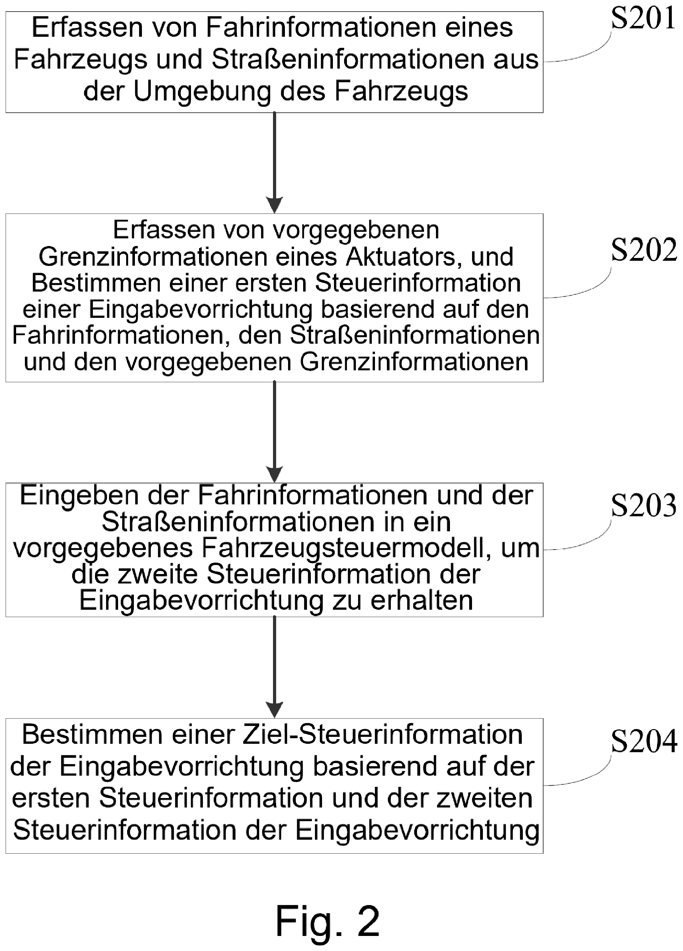

Fig. 2 zeigt ein schematisches Ablaufdiagramm eines Verfahrens zur Fahrzeugsteuerung mittels Fahrassistenz gemäß einem Ausführungsbeispiel der vorliegenden Anmeldung. Wie in Fig. 2 gezeigt, wird in diesem Ausführungsbeispiel auf Grundlage des in Fig. 1 dargestellten Ausführungsbeispiels das Verfahren zur Fahrzeugsteuerung mittels Fahrassistenz weiter detailliert beschrieben. Das Verfahren umfasst:
S201: Erfassen von Fahrinformationen eines Fahrzeugs und Straßeninformationen aus der Umgebung des Fahrzeugs, wobei die Fahrinformationen einen Fahrzustand des Fahrzeugs charakterisieren, und wobei zu den Straßeninformationen zumindest eins von der Straßenkrümmung und dem Haftungskoeffizienten der Straßenoberfläche gehört.

Beispielhaft kann dieser Schritt auf den obigen Schritt S101 verweisen und wird hier nicht mehr wiederholt.

S202: Erfassen von vorgegebenen Grenzinformationen eines Aktuators, wobei die vorgegebenen Grenzinformationen einen Nenn-Drehmomentbereich des Aktuators charakterisieren; und Bestimmen einer ersten Steuerinformation einer Eingabevorrichtung basierend auf den Fahrinformationen, den Straßeninformationen und den vorgegebenen Grenzinformationen.

Beispielhaft sind an einem Fahrgestell des Fahrzeugs verschiedene Aktuatoren angebracht. Ein Aktuator bezeichnet eine Vorrichtung, die Steuersignale in physische Aktionen umsetzt. Beispielsweise bezeichnet ein Aktuator im Lenksystem des Fahrzeugs üblicherweise jegliche Vorrichtungen, die eine Eingabe des Lenkrads in eine Bewegung der Fahrzeugräder umsetzen. Die am Fahrgestell angebrachten Aktuatoren dienen hauptsächlich zur Steuerung der Bewegung und der Stabilität des Fahrzeugs. Beispielsweise können die Aktuatoren einen elektrischen Servolenkungsaktuator, einen hydraulischen Servolenkungsaktuator, einen Vierradlenkungsaktuator, einen Bremsaktuator sowie einen Aktuator eines Federungssystems usw. umfassen.

In unterschiedlichen Fahrzeugen können unterschiedliche Aktuatoren angebracht sein. Für jeden Aktuator kann der Einbauzustand des Aktuators am Fahrzeug bestimmt werden, wobei der Einbauzustand beispielsweise "angebracht" oder "nicht angebracht" umfassen kann. Für angebrachte Aktuatoren sind jedem Aktuator eigene vorgegebene Grenzinformationen zugeordnet. Diese vorgegebenen Grenzinformationen charakterisieren einen Nenn-Drehmomentbereich des Aktuators, das heißt, ein maximales Drehmoment, das vor der Auslieferung des Fahrzeugs für den Aktuator festgelegt ist. Die vorgegebenen Grenzinformationen eines Aktuators bestimmen die Art und den Umfang der durch diesen Aktuator ausführbaren Betätigungen. So kann beispielsweise eine Funktionsgrenze eines Lenkaktuators den maximalen Lenkwinkel und die maximale Lenkkraft usw. umfassen, die er bereitstellen kann.

Unterschiedliche Aktuatoren können unterschiedlichen Eingabevorrichtungen zugeordnet sein. Der Aktuator kann basierend auf einer durch die Eingabevorrichtung empfangenen Benutzerbetätigung das Fahren des Fahrzeugs steuern. Beispielsweise führt der Benutzer eine Betätigung an der Eingabevorrichtung aus, die Eingabevorrichtung übermittelt diese Betätigung an den Aktuator, und der Aktuator steuert das Fahrzeug basierend auf der empfangenen Betätigung. Beim Bestimmen der ersten Steuerinformation der Eingabevorrichtung kann zunächst ein der Eingabevorrichtung zugeordneter Aktuator bestimmt werden, und anschließend können die vorgegebenen Grenzinformationen dieses Aktuators erfasst werden. Eine Eingabevorrichtung kann einem oder mehreren Aktuatoren zugeordnet sein. In diesem Ausführungsbeispiel kann für einen dem Lenkrad zugeordneten Aktuator die vorgegebene Grenzinformation ein maximales Nenn-Giermoment charakterisieren. Für einen dem Fahrpedal zugeordneten Aktuator kann die vorgegebene Grenzinformation ein maximales Nenn-Antriebsmoment charakterisieren. Für einen dem Bremspedal zugeordneten Aktuator kann die vorgegebene Grenzinformation ein maximales Nenn-Bremsmoment charakterisieren.

Durch Kombinieren der Fahrinformationen, der Straßeninformationen und der vorgegebenen Grenzinformationen des Aktuators kann die erste Steuerinformation der Eingabevorrichtung bestimmt werden. Beispielsweise können die Fahrinformationen, die Straßeninformationen und die vorgegebenen Grenzinformationen in ein vorgegebenes Fahrzeugdynamikmodell eingesetzt werden, um die erste Steuerinformation zu erhalten. Das Fahrzeugdynamikmodell ist ein mathematisches Modell. In diesem Ausführungsbeispiel ist das vorgegebene Fahrzeugdynamikmodell nicht speziell eingeschränkt.

In diesem Ausführungsbeispiel umfasst das Bestimmen einer ersten Steuerinformation der Eingabevorrichtung basierend auf den Fahrinformationen, den Straßeninformationen und den vorgegebenen Grenzinformationen: Bestimmen von zulässigen Grenzinformationen des Aktuators basierend auf den Fahrinformationen, den Straßeninformationen und den vorgegebenen Grenzinformationen, wobei die zulässigen Grenzinformationen ein zum aktuellen Zeitpunkt zulässiges maximales Drehmoment des Aktuators charakterisieren; und Bestimmen der ersten Steuerinformation der Eingabevorrichtung basierend auf den zulässigen Grenzinformationen des Aktuators.

Insbesondere kann das Fahrzeugdynamikmodell basierend auf den Fahrinformationen, den Straßeninformationen und den vorgegebenen Grenzinformationen neue Grenzinformationen ausgeben. Die ausgegebenen Grenzinformationen sind zulässige Grenzinformationen, welche ein zum aktuellen Zeitpunkt zulässiges maximales Drehmoment des Aktuators charakterisieren. Das heißt, die vorgegebenen Grenzinformationen stellen feste Werte dar, die durch eigene Hardware und Eigenschaften des Aktuators bestimmt sind, während die zulässigen Grenzinformationen dynamische Werte darstellen, die sich zu unterschiedlichen Zeitpunkten ändern können. Die zulässigen Grenzinformationen sind typischerweise kleiner oder gleich den vorgegebenen Grenzinformationen.

Zwischen den Grenzinformationen des Aktuators und den Steuerinformationen der Eingabevorrichtung besteht eine vorgegebene Zuordnungsbeziehung. Nach dem Erhalten der zulässigen Grenzinformationen des Aktuators kann basierend auf dieser Zuordnungsbeziehung eine den zulässigen Grenzinformationen entsprechende Steuerinformation ermittelt werden, welche als erste Steuerinformation verwendet wird. Beispielsweise können ein einem aktuell zulässigen maximalen Giermoment entsprechender Drehwinkel des Lenkrads, eine einem aktuell zulässigen maximalen Antriebsmoment entsprechende Stellung des Fahrpedals sowie eine einem aktuell zulässigen maximalen Bremsmoment entsprechende Stellung des Bremspedals bestimmt werden.

Der Vorteil dieser Vorgehensweise besteht darin, dass zunächst die zulässigen Grenzinformationen mittels eines Fahrzeugdynamikmodells bestimmt und anschließend die zulässigen Grenzinformationen in die erste Steuerinformation umgewandelt werden, so dass die erste Steuerinformation bestimmt und es sichergestellt wird, dass eine durch die erste Steuerinformation vorgegebene Grenze den Nennbereich des Aktuators nicht überschreitet. Bei der Fahrassistenz unter der Bedingung der ersten Steuerinformation wird die Fahrstabilität des Fahrzeugs verbessert.

S203: Eingeben der Fahrinformationen und der Straßeninformationen in ein vorgegebenes Fahrzeugsteuermodell, um die zweite Steuerinformation der Eingabevorrichtung zu erhalten, wobei das vorgegebene Fahrzeugsteuermodell ein vorab trainiertes neuronales Netzwerkmodell ist, das dazu dient, basierend auf den Fahrinformationen und den Straßeninformationen die zweite Steuerinformation auszugeben.

Beispielhaft ist ein Fahrzeugsteuermodell vorab vorgesehen, bei dem es sich um ein vorab trainiertes, neuronales Netzwerkmodell, also ein Al-Modell, handelt. In diesem Ausführungsbeispiel wird die Modellstruktur des Fahrzeugsteuermodells nicht speziell eingeschränkt. Die Fahrinformationen und die Straßeninformationen werden in das vorgegebene Fahrzeugsteuermodell eingegeben, und das Fahrzeugsteuermodell gibt die zweite Steuerinformation der Eingabevorrichtung aus. Es gibt verschiedene Arten von Eingabevorrichtungen, und das Fahrzeugsteuermodell kann zweite Steuerinformationen für die verschiedenen Arten von Eingabevorrichtungen ausgeben. Beispielsweise können ein Drehwinkel des Lenkrads, eine Stellung des Fahrpedals sowie eine Stellung des Bremspedals usw. ausgegeben werden.

Das Fahrzeugsteuermodell kann vorab trainiert werden, um die Bestimmungspräzision der zweiten Steuerinformation zu erhöhen. Vorab wird ein zu trainierender Datensatz aufgenommen. Der zu trainierende Datensatz kann zu trainierende Fahrinformationen und Straßeninformationen umfassen, und er kann ferner als Labels für das Modelltraining dienende Sollwerte für den Drehwinkel des Lenkrads, die Stellung des Fahrpedals, die Stellung des Bremspedals usw. unter diesen Fahr- und Straßeninformationen umfassen. Der spezielle Trainingsprozess kann wie folgt durchgeführt werden:
Schritt A: Einstellen eines Fahrmodus eines Fahrzeugs, beispielsweise eines Eco-Modus.
Schritt B: Fahren des Fahrzeugs durch einen professionellen Fahrer auf Straßen mit unterschiedlichen Krümmungen und Haftungskoeffizienten, wobei Straßeninformationen, Zustandsinformationen des Fahrzeugs und Steuerinformationen hinsichtlich der Betätigung des Fahrers mittels eines Bordsensors, eines Zustandsschätzers und dergleichen aufgenommen werden. Das heißt, dabei werden zu trainierende Straßeninformationen, wie Straßenkrümmung und Haftungskoeffizient der Straßenoberfläche und dergleichen, und zu trainierende Fahrinformationen, wie Fahrzeuggeschwindigkeit, Beschleunigung, Giergeschwindigkeit, Schwimmwinkel und dergleichen, aufgenommen, und dann werden der Ist-Drehwinkel des Lenkrads, die Ist-Stellung des Fahrpedals, die Ist-Stellung des Bremspedals und dergleichen als Labels für das Modelltraining erhalten.
Schritt C: Umschalten von Fahrmodi und Wiederholen von Schritt B, um eine ausreichende Menge an zu trainierenden Daten zu erhalten.
Schritt D: Verwenden von Straßenkrümmung, Haftungskoeffizient der Straßenoberfläche, Fahrzeuggeschwindigkeit, Beschleunigung, Giergeschwindigkeit, Schwimmwinkel und dergleichen als Eingabedaten, um einen Drehwinkel des Lenkrads, eine Stellung des Fahrpedals sowie eine Stellung des Bremspedals, die von dem Modell ausgegeben werden, zu erhalten, und Trainieren des Modells basierend auf vorbestimmten Labels und Ausgabedaten des Modells, um ein trainiertes Fahrzeugsteuermodell zu erhalten.

In diesem Ausführungsbeispiel wird ein Verfahren zur Fahrassistenz bereitgestellt, bei dem ein Al-Modell mit einem Fahrzeugdynamikmodell kombiniert wird, um die Bestimmungspräzision der Ziel-Steuerinformation zu erhöhen und dem Fahrer dabei zu helfen, optimale Steuerbetätigungen auszuführen.

S204: Bestimmen einer Ziel-Steuerinformation der Eingabevorrichtung basierend auf der ersten Steuerinformation und der zweiten Steuerinformation der Eingabevorrichtung, wobei die Ziel-Steuerinformation eine optimale Betätigung der Eingabevorrichtung durch den Benutzer charakterisiert, und wobei die Ziel-Steuerinformation dazu dient, den Benutzer bei der Betätigung der Eingabevorrichtung im Fahrzeug anzuleiten.

Beispielhaft kann dieser Schritt auf den obigen Schritt S103 verwiesen werden und wird hier nicht mehr wiederholt.

Bei dem Verfahren zur Fahrzeugsteuerung mittels Fahrassistenz gemäß den Ausführungsbeispielen der vorliegenden Anmeldung lassen sich durch das Erfassen von den Fahrinformationen des Fahrzeugs und den Straßeninformationen aus der Umgebung des Fahrzeugs ein aktueller Fahrzustand des Fahrzeugs sowie Informationen wie die Krümmung einer aktuell befahrenen Straße und der Haftungskoeffizient der Straßenoberfläche erhalten. Dadurch wird eine gezielte assistierte Steuerung des Fahrzeugs basierend auf den aktuellen Fahrinformationen und Straßeninformationen durchgeführt. Basierend auf den Fahrinformationen und den Straßeninformationen können die erste Steuerinformation und die zweite Steuerinformation der Eingabevorrichtung im Fahrzeug bestimmt werden, wobei die erste Steuerinformation eine obere Grenze für eine durch den Benutzer an der Eingabevorrichtung ausführbare Betätigung charakterisiert, wobei die zweite Steuerinformation eine dem Benutzer empfohlene Betätigung der Eingabevorrichtung charakterisiert, und wobei zu der Eingabevorrichtung zumindest eins von einem Lenkrad, einem Fahrpedal und einem Bremspedal gehört. Das heißt, basierend auf der tatsächlichen Fahrsituation können die erste Steuerinformation wie ein maximal zulässiger Drehwinkel des Lenkrads sowie die zweite Steuerinformation wie ein empfohlener Drehwinkel des Lenkrads bestimmt werden. Durch Kombinieren der beiden Steuerinformationen kann eine optimale Steuerinformation der Eingabevorrichtung, nämlich die Ziel-Steuerinformation, bestimmt werden. Basierend auf der Ziel-Steuerinformation wird ein Fahrer bei der Betätigung der Eingabevorrichtung angeleitet, um dem Fahrer dabei zu helfen, das Fahrzeug präzise zu steuern, die Fahrstabilität des Fahrzeugs zu erhöhen und das Fahrerlebnis zu verbessern.

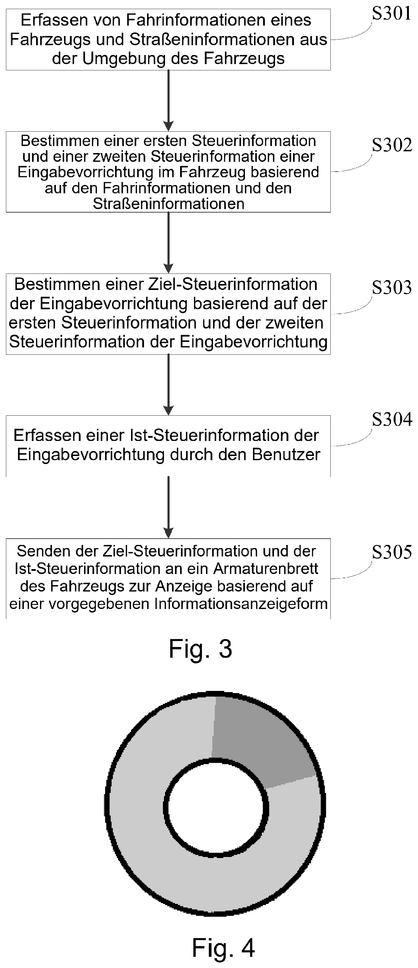

Fig. 3 zeigt ein schematisches Ablaufdiagramm eines Verfahrens zur Fahrzeugsteuerung mittels Fahrassistenz gemäß einem Ausführungsbeispiel der vorliegenden Anmeldung. Wie in Fig. 3 gezeigt, wird in diesem Ausführungsbeispiel auf Grundlage des in Fig. 1 dargestellten Ausführungsbeispiels das Verfahren zur Fahrzeugsteuerung mittels Fahrassistenz weiter detailliert beschrieben. Das Verfahren umfasst:
S301: Erfassen von Fahrinformationen eines Fahrzeugs und Straßeninformationen aus der Umgebung des Fahrzeugs, wobei die Fahrinformationen einen Fahrzustand des Fahrzeugs charakterisieren, und wobei zu den Straßeninformationen zumindest eins von der Straßenkrümmung und dem Haftungskoeffizienten der Straßenoberfläche gehört.

Beispielhaft kann dieser Schritt auf den obigen Schritt S101 verweisen und wird hier nicht mehr wiederholt.

S302: Bestimmen einer ersten Steuerinformation und einer zweiten Steuerinformation einer Eingabevorrichtung im Fahrzeug basierend auf den Fahrinformationen und den Straßeninformationen, wobei die erste Steuerinformation eine obere Grenze für eine durch einen Benutzer an der Eingabevorrichtung ausführbare Betätigung charakterisiert, wobei die zweite Steuerinformation eine dem Benutzer empfohlene Betätigung der Eingabevorrichtung charakterisiert, und wobei zu der Eingabevorrichtung zumindest eins von einem Lenkrad, einem Fahrpedal und einem Bremspedal gehört.

Beispielhaft kann dieser Schritt auf den obigen Schritt S102 verwiesen werden und wird hier nicht mehr wiederholt.

S303: Bestimmen einer Ziel-Steuerinformation der Eingabevorrichtung basierend auf der ersten Steuerinformation und der zweiten Steuerinformation der Eingabevorrichtung, wobei die Ziel-Steuerinformation eine optimale Betätigung der Eingabevorrichtung durch den Benutzer charakterisiert, und wobei die Ziel-Steuerinformation dazu dient, den Benutzer bei der Betätigung der Eingabevorrichtung im Fahrzeug anzuleiten.

Beispielhaft kann dieser Schritt auf den obigen Schritt S103 verwiesen werden und wird hier nicht mehr wiederholt.

S304: Erfassen einer Ist-Steuerinformation der Eingabevorrichtung durch den Benutzer, wobei die Ist-Steuerinformation eine Ist-Betätigung der Eingabevorrichtung durch den Benutzer charakterisiert.

Beispielhaft kann die Ist-Steuerinformation jeder Eingabevorrichtung durch den Benutzer in Echtzeit erfasst werden, wobei die Ist-Steuerinformation eine durch den Benutzer an der jeweiligen Eingabevorrichtung ausgeführte Ist-Betätigung charakterisiert. Wenn es sich bei der Eingabevorrichtung beispielsweise um das Lenkrad handelt, charakterisiert die Ist-Steuerinformation einen Ist-Drehwinkel des Lenkrads bei der Drehung durch den Benutzer. Wenn es sich bei der Eingabevorrichtung um das Bremspedal handelt, charakterisiert die Ist-Steuerinformation eine Ist-Stellung des Bremspedals nach dem Treten des Bremspedals durch den Benutzer.

S305: Senden der Ziel-Steuerinformation und der Ist-Steuerinformation an ein Armaturenbrett des Fahrzeugs zur Anzeige basierend auf einer vorgegebenen Informationsanzeigeform.

Beispielhaft kann bereits nach dem Erhalten der Ziel-Steuerinformation und vor dem Erhalten der Ist-Steuerinformation die Ziel-Steuerinformation auf dem Armaturenbrett des Fahrzeugs angezeigt werden, bevor die Ist-Steuerinformation angezeigt wird. Es ist auch möglich, dass erst nach dem Erhalten der Ist-Steuerinformation die Ziel-Steuerinformation und die Ist-Steuerinformation gemeinsam auf dem Armaturenbrett angezeigt werden.

Eine Informationsanzeigeform kann vorab festgelegt werden. Dann werden die Ziel-Steuerinformation und die Ist-Steuerinformation an das Armaturenbrett des Fahrzeugs gesendet und dort entsprechend der vorgegebenen Informationsanzeigeform angezeigt. Wenn beispielsweise die vorgegebene Informationsanzeigeform als Balkendiagramm ausgeführt ist, können die Ziel-Steuerinformation und die Ist-Steuerinformation als zwei Datenbalken dargestellt werden. Dabei kann die Höhe des Datenbalkens der Ziel-Steuerinformation festgelegt sein, während die Höhe des Datenbalkens der Ist-Steuerinformation entsprechend der Benutzerbetätigung variieren kann. Beispielsweise ist bei dem Lenkrad der Fall, dass mit zunehmendem Drehwinkel des Lenkrads die Höhe des Datenbalkens der Ist-Steuerinformation erhöht werden kann, so dass die Abweichung der Ist-Steuerinformation von der Ziel-Steuerinformation für den Benutzer visuell erkennbar ist.

Fig. 4 zeigt eine schematische Darstellung zur Informationsanzeige auf einem Armaturenbrett. Die in Fig. 4 dargestellte Informationsanzeigeform ist als Ringdiagramm ausgeführt, wobei die Größe der Steuerinformation durch die Bogenlänge des Ringdiagramms dargestellt werden kann. Ferner können die vorgegebenen Grenzinformationen in das Format von Steuerinformationen umgewandelt werden und als Nenn-Steuerinformation verwendet werden, welche eine maximale Steuerinformation charakterisiert, die vor der Auslieferung für die Eingabevorrichtung nominell festgelegt ist. Die Nenn-Steuerinformation kann als gesamte Bogenlänge eines Kreisrings angesehen werden, wobei die Ziel-Steuerinformation einen Teil des Kreisrings darstellt, beispielsweise eine halbe Bogenlänge des Kreisrings. Mit der Betätigung der Eingabevorrichtung durch den Benutzer kann sich die der Ist-Steuerinformation entsprechende Bogenlänge ändern. Beispielsweise kann die Bogenlänge der Ist-Steuerinformation den Teil der Ziel-Steuerinformation allmählich überdecken und sogar den Teil der Nenn-Steuerinformation überdecken. In Fig. 4 stellt der blaue Teil die Nenn-Steuerinformation dar, der grüne Teil stellt die Ziel-Steuerinformation dar, und der rote Teil stellt die Ist-Steuerinformation dar. Die Länge des blauen Teils bleibt konstant. In demselben Fahrszenario bleibt die Länge des grünen Teils konstant. Die Länge des roten Teils kann sich entsprechend der Benutzerbetätigung ändern. Wenn der rote Teil genau den grünen Teil überdeckt, bedeutet dies, dass die aktuelle Benutzerbetätigung optimal ist.

In diesem Ausführungsbeispiel umfasst das Verfahren ferner: Bestimmen der Differenz zwischen der Ist-Steuerinformation und der Ziel-Steuerinformation; und Ausgeben einer Warninformation auf dem Armaturenbrett des Fahrzeugs, wenn die bestimmte Differenz innerhalb eines vorgegebenen Differenzbereichs liegt, wobei die Warninformation den Benutzer darauf hinweist, die Betätigung der Eingabevorrichtung abzuschließen.

Insbesondere kann die Differenz zwischen der Ist-Steuerinformation und der Ziel-Steuerinformation in Echtzeit bestimmt werden. Beispielsweise kann der optimale Drehwinkel des Lenkrads vom Ist-Drehwinkel des Lenkrads subtrahiert werden, um die Differenz zu erhalten. Anhand der berechneten Differenz kann bestimmt werden, ob die aktuelle Benutzerbetätigung eine optimale Betätigung erreicht. Jede Eingabevorrichtung kann einer Differenz entsprechen.

Für jede Eingabevorrichtung kann ein Differenzschwellenwert vorab eingestellt werden. Die Differenz der jeweiligen Eingabevorrichtung wird mit dem entsprechenden Differenzschwellenwert verglichen. Falls bestimmt wird, dass die Differenz innerhalb eines vorgegebenen Differenzbereichs liegt, bedeutet dies, dass die Ist-Betätigung des Benutzers nahe an der optimalen Betätigung liegt, dass eine weitere Betätigung der Eingabevorrichtung gestoppt werden kann, und dass das Fahrzeug eine Warninformation auf dem Armaturenbrett ausgeben kann, die den Benutzer darauf hinweist, die Betätigung der Eingabevorrichtung abzuschließen. Falls hingegen bestimmt wird, dass die Differenz nicht innerhalb des vorgegebenen Differenzbereichs liegt, kann der Benutzer die Betätigung fortsetzen, bis er eine Warninformation empfängt.

Der Vorteil dieser Vorgehensweise besteht darin, dass der Benutzer über das Armaturenbrett einen Hinweis ermitteln kann. Dabei wird der Benutzer darauf hingewiesen, eine optimale Betätigung auszuführen, um die Steuerpräzision des Fahrzeugs zu erhöhen und die Fahrfähigkeit des Benutzers zu verbessern.

In diesem Ausführungsbeispiel handelt es sich bei der Eingabevorrichtung um das Lenkrad, wobei die Ist-Steuerinformation einen Ist-Drehwinkel des Lenkrads unter Steuerung des Benutzers und die Ziel-Steuerinformation einen optimalen Drehwinkel des Lenkrads unter Steuerung des Benutzers charakterisiert. Das Verfahren umfasst ferner: Aufbringen eines Gegendrehmoments vorgegebener Größe auf das Lenkrad, wenn die Ist-Steuerinformation größer als die Ziel-Steuerinformation ist, wobei das Gegendrehmoment den Benutzer darauf hinweist, das Drehen des Lenkrads zu stoppen.

Im Fall der Eingabevorrichtung als Lenkrad charakterisiert insbesondere die Ist-Steuerinformation den Ist-Drehwinkel des Lenkrads unter Steuerung des Benutzers, und die Ziel-Steuerinformation charakterisiert einen bestimmten, optimalen Drehwinkel des Lenkrads.

Wenn beim Vergleich der Ist-Steuerinformation mit der Ziel-Steuerinformation festgestellt wird, dass die Ist-Steuerinformation größer als die Ziel-Steuerinformation ist, bedeutet dies, dass der Ist-Drehwinkel des Lenkrads den optimalen Drehwinkel bereits überschreitet. Um ein weiteres Drehen des Lenkrads durch den Benutzer zu vermeiden, kann mittels eines EPS-Systems (Electric Power Steering, elektronische Servolenkung) ein Gegendrehmoment vorgegebener Größe auf das Lenkrad aufgebracht werden. Dabei kann das Gegendrehmoment dazu verwendet werden, den Benutzer darauf hinzuweisen, das Drehen des Lenkrads zu stoppen. Das heißt, durch das Aufbringen des Gegendrehmoments wird bei einem weiteren Drehen des Lenkrads durch den Benutzer ein Widerstand gegen den Benutzer erzeugt, so dass der Benutzer nach dem Wahrnehmen des Widerstands das Drehen stoppt.

Der Vorteil dieser Vorgehensweise besteht darin, dass, wenn der Ist-Drehwinkel des Lenkrads den optimalen Wert überschreitet, ein gegenläufiger Drehmomentversatz im Rahmen der EPS-Drehmomentunterstützung aufgebracht wird, um den Benutzer darauf hinzuweisen, dass die aktuelle Betätigung zu einer Instabilität des Fahrzeugs führen kann, so dass die Steuerpräzision des Fahrzeugs erhöht wird. Ferner ist die Interaktionsform nicht auf die Anzeige auf dem Armaturenbrett beschränkt, sondern es ist auch möglich, eine direkte Rückmeldung an den Benutzer durch eine Kraftwirkung zu geben, um das Fahrerlebnis zu verbessern.

In diesem Ausführungsbeispiel handelt es sich bei der Eingabevorrichtung um eine Pedalvorrichtung, die ein Fahrpedal oder ein Bremspedal ist, wobei die Ist-Steuerinformation eine Ist-Stellung der Pedalvorrichtung unter Steuerung des Benutzers und die Ziel-Steuerinformation eine optimale Stellung des Lenkrads und der Pedalvorrichtung unter Steuerung des Benutzers charakterisiert. Das Verfahren umfasst zudem: Aufbringen eines Pedalwiderstands vorgegebener Größe auf die Pedalvorrichtung, wenn die Ist-Steuerinformation größer als die Ziel-Steuerinformation ist, wobei der Pedalwiderstand den Benutzer darauf hinweist, das Treten der Pedalvorrichtung zu stoppen.

Insbesondere kann es sich bei der Pedalvorrichtung um das Fahrpedal oder das Bremspedal oder dergleichen handeln. Im Fall der Eingabevorrichtung als Pedalvorrichtung charakterisiert die Ist-Steuerinformation die Ist-Stellung der Pedalvorrichtung unter Steuerung des Benutzers, das heißt die Ist-Höhe des Pedals nach dem Treten der Pedalvorrichtung durch den Benutzer. Die Ziel-Steuerinformation charakterisiert die optimale Stellung der Pedalvorrichtung unter Steuerung des Benutzers, das heißt, die Höhe, die das Pedal nach dem Treten der Pedalvorrichtung durch den Benutzer erreichen soll.

Ein kleinerer Wert der Pedalstellung bedeutet, dass sich das Pedal in einer höheren Stellung befindet, das heißt, dass es nicht oder nur geringfügig getreten ist. Dies bedeutet eine kleinere Eingabe für die Beschleunigung oder Bremsung. Ein größerer Wert der Pedalstellung bedeutet, dass das Pedal tiefer getreten ist, das heißt, dass es sich somit nahe an seinem maximalen Hub befindet. Dies bedeutet eine größere Eingabe für die Beschleunigung oder Bremsung. Je kleiner also der Wert der Pedalstellung ist, desto eher bedeutet dies, dass das Pedal nicht umso tiefer getreten wurde, sondern in einem nicht oder nur geringfügig getretenen Zustand ist. Umgekehrt gilt: je höher der Wert der Pedalstellung ist, desto eher bedeutet dies, dass das Pedal tiefer getreten wurde.

Wenn beim Vergleich der Ist-Steuerinformation mit der Ziel-Steuerinformation die Ist-Steuerinformation größer als die Ziel-Steuerinformation ist, bedeutet dies, dass die getretene Tiefe des Pedals die optimale Tiefe bereits überschreitet. Um ein weiteres Treten des Pedals durch den Benutzer zu vermeiden, kann ein Pedalwiderstand vorgegebener Größe auf die Pedalvorrichtung aufgebracht werden, wobei der Pedalwiderstand den Benutzer darauf hinweist, das Treten der Pedalvorrichtung zu stoppen. Das heißt, durch das Aufbringen des Pedalwiderstands kann ein weiteres Treten des Pedals durch den Benutzer behindert werden, so dass der Benutzer nach dem Wahrnehmen des Widerstands seine Betätigung stoppen kann.

Der Vorteil dieser Vorgehensweise besteht darin, dass, wenn die getretene Ist-Tiefe den optimalen Wert überschreitet, der Pedalwiderstand erhöht wird, um den Benutzer darauf hinzuweisen, dass die aktuelle Betätigung zu einer Instabilität des Fahrzeugs führen kann, so dass die Steuerpräzision des Fahrzeugs erhöht wird. Ferner ist die Interaktionsform nicht auf die Anzeige auf dem Armaturenbrett beschränkt, sondern es ist auch möglich, eine direkte Rückmeldung an den Benutzer durch eine Kraftwirkung zu geben, um das Fahrerlebnis zu verbessern.

Bei dem Verfahren zur Fahrzeugsteuerung mittels Fahrassistenz gemäß den Ausführungsbeispielen der vorliegenden Anmeldung lassen sich durch das Erfassen von den Fahrinformationen des Fahrzeugs und den Straßeninformationen aus der Umgebung des Fahrzeugs ein aktueller Fahrzustand des Fahrzeugs sowie Informationen wie die Krümmung einer aktuell befahrenen Straße und der Haftungskoeffizient der Straßenoberfläche erhalten. Dadurch wird eine gezielte assistierte Steuerung des Fahrzeugs basierend auf den aktuellen Fahrinformationen und Straßeninformationen durchgeführt. Basierend auf den Fahrinformationen und den Straßeninformationen können die erste Steuerinformation und die zweite Steuerinformation der Eingabevorrichtung im Fahrzeug bestimmt werden, wobei die erste Steuerinformation eine obere Grenze für eine durch den Benutzer an der Eingabevorrichtung ausführbare Betätigung charakterisiert, wobei die zweite Steuerinformation eine dem Benutzer empfohlene Betätigung der Eingabevorrichtung charakterisiert, und wobei zu der Eingabevorrichtung zumindest eins von einem Lenkrad, einem Fahrpedal und einem Bremspedal gehört. Das heißt, basierend auf der tatsächlichen Fahrsituation können die erste Steuerinformation wie ein maximal zulässiger Drehwinkel des Lenkrads sowie die zweite Steuerinformation wie ein empfohlener Drehwinkel des Lenkrads bestimmt werden. Durch Kombinieren der beiden Steuerinformationen kann eine optimale Steuerinformation der Eingabevorrichtung, nämlich die Ziel-Steuerinformation, bestimmt werden. Basierend auf der Ziel-Steuerinformation wird ein Fahrer bei der Betätigung der Eingabevorrichtung angeleitet, um dem Fahrer dabei zu helfen, das Fahrzeug präzise zu steuern, die Fahrstabilität des Fahrzeugs zu erhöhen und das Fahrerlebnis zu verbessern.

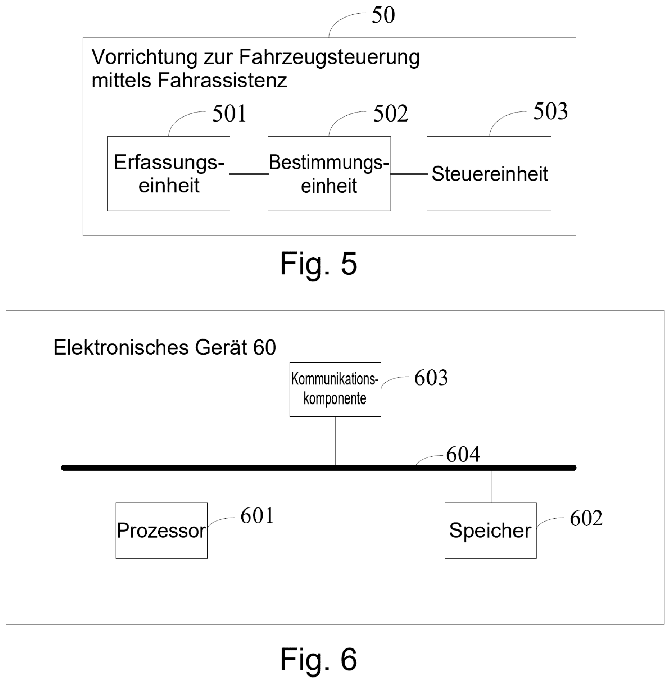

Fig. 5 zeigt eine schematische Strukturansicht einer Vorrichtung zur Fahrzeugsteuerung mittels Fahrassistenz gemäß einem Ausführungsbeispiel der vorliegenden Anmeldung. Wie in Fig. 5 gezeigt, umfasst eine Vorrichtung 50 zur Fahrzeugsteuerung mittels Fahrassistenz gemäß diesem Ausführungsbeispiel:
eine Erfassungseinheit 501, zum Erfassen von Fahrinformationen eines Fahrzeugs und Straßeninformationen aus der Umgebung des Fahrzeugs, wobei die Fahrinformationen einen Fahrzustand des Fahrzeugs charakterisieren, und wobei zu den Straßeninformationen zumindest eins von der Straßenkrümmung und dem Haftungskoeffizienten der Straßenoberfläche gehört;
eine Bestimmungseinheit 502, zum Bestimmen einer ersten Steuerinformation und einer zweiten Steuerinformation einer Eingabevorrichtung im Fahrzeug basierend auf den Fahrinformationen und den Straßeninformationen, wobei die erste Steuerinformation eine obere Grenze für eine durch einen Benutzer an der Eingabevorrichtung ausführbare Betätigung charakterisiert, wobei die zweite Steuerinformation eine dem Benutzer empfohlene Betätigung der Eingabevorrichtung charakterisiert, und wobei zu der Eingabevorrichtung zumindest eins von einem Lenkrad, einem Fahrpedal und einem Bremspedal gehört; und
eine Steuereinheit 503, zum Bestimmen einer Ziel-Steuerinformation der Eingabevorrichtung basierend auf der ersten Steuerinformation und der zweiten Steuerinformation der Eingabevorrichtung, wobei die Ziel-Steuerinformation eine optimale Betätigung der Eingabevorrichtung durch den Benutzer charakterisiert, und wobei die Ziel-Steuerinformation dazu dient, den Benutzer bei der Betätigung der Eingabevorrichtung im Fahrzeug anzuleiten.

In einer möglichen Implementierung ist vorgesehen, dass an einem Fahrgestell des Fahrzeugs ein Aktuator angebracht ist, wobei der Aktuator dazu dient, basierend auf einer durch eine Eingabevorrichtung empfangenen Benutzerbetätigung das Fahren des Fahrzeugs zu steuern. Die Bestimmungseinheit 502 umfasst:
ein Grenz-Erfassungsmodul, zum Erfassen von vorgegebenen Grenzinformationen des Aktuators, wobei die vorgegebenen Grenzinformationen einen Nenn-Drehmomentbereich des Aktuators charakterisieren; und
ein erstes Bestimmungsmodul, zum Bestimmen der ersten Steuerinformation der Eingabevorrichtung basierend auf den Fahrinformationen, den Straßeninformationen und den vorgegebenen Grenzinformationen.

In einer möglichen Implementierung wird das erste Bestimmungsmodul spezifisch für die folgenden Zwecke verwendet:
Bestimmen von zulässigen Grenzinformationen des Aktuators basierend auf den Fahrinformationen, den Straßeninformationen und den vorgegebenen Grenzinformationen, wobei die zulässigen Grenzinformationen ein zum aktuellen Zeitpunkt zulässiges maximales Drehmoment des Aktuators charakterisieren; und
Bestimmen der ersten Steuerinformation der Eingabevorrichtung basierend auf den zulässigen Grenzinformationen des Aktuators.

In einer möglichen Implementierung umfasst die Bestimmungseinheit 502:
ein zweites Bestimmungsmodul, zum Eingeben der Fahrinformationen und der Straßeninformationen in ein vorgegebenes Fahrzeugsteuermodell, um die zweite Steuerinformation der Eingabevorrichtung zu erhalten, wobei das vorgegebene Fahrzeugsteuermodell ein vorab trainiertes neuronales Netzwerkmodell ist, das dazu dient, basierend auf den Fahrinformationen und den Straßeninformationen die zweite Steuerinformation auszugeben.

In einer möglichen Implementierung wird die Steuereinheit 503 spezifisch dafür verwendet:
Bestimmen eines Minimalwerts von der ersten Steuerinformation und der zweiten Steuerinformation der Eingabevorrichtung als die Ziel-Steuerinformation der Eingabevorrichtung.

In einer möglichen Implementierung sind ferner folgende Einheiten vorgesehen:
eine Ist-Erfassungseinheit, zum Erfassen einer Ist-Steuerinformation der Eingabevorrichtung durch den Benutzer, wobei die Ist-Steuerinformation eine Ist-Betätigung der Eingabevorrichtung durch den Benutzer charakterisiert; und
eine Anzeigeeinheit, zum Senden der Ziel-Steuerinformation und der Ist-Steuerinformation an ein Armaturenbrett des Fahrzeugs zur Anzeige basierend auf einer vorgegebenen Informationsanzeigeform.

In einer möglichen Implementierung sind ferner folgende Einheiten vorgesehen:
eine Differenzbestimmungseinheit, zum Bestimmen der Differenz zwischen der Ist-Steuerinformation und der Ziel-Steuerinformation; und
eine Warneinheit, zum Ausgeben einer Warninformation auf dem Armaturenbrett des Fahrzeugs, wenn die bestimmte Differenz innerhalb eines vorgegebenen Differenzbereichs liegt, wobei die Warninformation den Benutzer darauf hinweist, die Betätigung der Eingabevorrichtung abzuschließen.

In einer möglichen Implementierung ist vorgesehen, dass es sich bei der Eingabevorrichtung um ein Lenkrad handelt, wobei die Ist-Steuerinformation einen Ist-Drehwinkel des Lenkrads unter Steuerung des Benutzers und die Ziel-Steuerinformation einen optimalen Drehwinkel des Lenkrads unter Steuerung des Benutzers charakterisiert. Die Vorrichtung umfasst ferner:
eine Drehmomentaufbringungseinheit, zum Aufbringen eines Gegendrehmoments vorgegebener Größe auf das Lenkrad, wenn die Ist-Steuerinformation größer als die Ziel-Steuerinformation ist, wobei das Gegendrehmoment den Benutzer darauf hinweist, das Drehen des Lenkrads zu stoppen.

In einer möglichen Implementierung ist vorgesehen, dass es sich bei der Eingabevorrichtung um eine Pedalvorrichtung, die ein Fahr- oder Bremspedal ist, handelt, wobei die Ist-Steuerinformation eine Ist-Stellung der Pedalvorrichtung unter Steuerung des Benutzers und die Ziel-Steuerinformation eine optimale Stellung des Lenkrads und der Pedalvorrichtung unter Steuerung des Benutzers charakterisiert, und wobei das Verfahren ferner umfasst:
eine Widerstandsaufbringungseinheit, zum Aufbringen eines Pedalwiderstands vorgegebener Größe auf die Pedalvorrichtung, wenn die Ist-Steuerinformation größer als die Ziel-Steuerinformation ist, wobei der Pedalwiderstand den Benutzer darauf hinweist, das Treten der Pedalvorrichtung zu stoppen.

Die Vorrichtung zur Fahrzeugsteuerung mittels Fahrassistenz gemäß diesem Ausführungsbeispiel kann das Verfahren gemäß den vorstehend beschriebenen Verfahrensausführungsbeispielen ausführen, wobei das Implementierungsprinzip und die technischen Effekte ähnlich sind und in dem vorliegenden Ausführungsbeispiel nicht mehr wiederholt werden.

Fig. 6 zeigt eine schematische Strukturdarstellung eines elektronischen Geräts gemäß einem Ausführungsbeispiel der vorliegenden Anmeldung. Wie in Fig. 6 gezeigt, umfasst ein elektronisches Gerät 60 gemäß diesem Ausführungsbeispiel mindestens einen Prozessor 601 und einen Speicher 602. Optional umfasst das Gerät 60 ferner eine Kommunikationskomponente 603. Dabei können der Prozessor 601, der Speicher 602 und die Kommunikationskomponente 603 über einen Bus 604 miteinander verbunden sein.

In einem spezifischen Implementierungsvorgang führt der mindestens eine Prozessor 601 die im Speicher 602 gespeicherten computerausführbaren Anweisungen aus, so dass der mindestens eine Prozessor 601 das vorstehend beschriebene Verfahren ausführt.

Der spezifische Umsetzungsvorgang des Prozessors 601 kann auf das obige Verfahrensausführungsbeispiel verwiesen sein, dessen Umsetzungsprinzipien und technische Auswirkungen ähnlich sind und hierbei im vorliegenden Ausführungsbeispiel nicht mehr wiederholt werden.

In den vorstehenden Ausführungsbeispielen ist zu verstehen, dass der Prozessor eine zentrale Verarbeitungseinheit (Englisch: Central Processing Unit, kurz: CPU) sein kann. Alternativ kann er auch ein anderer allgemeiner Prozessor, ein digitaler Signalprozessor (Englisch: Digital Signal Processor, kurz: DSP}, ein anwendungsspezifischer integrierter Schaltkreis (Englisch: Application Specific Integrated Circuit, kurz: ASIC) oder dergleichen sein. Der allgemeine Prozessor kann ein Mikroprozessor sein oder er kann unter anderem auch ein beliebiger herkömmlicher Prozessor sein. Die Schritte des im Zusammenhang mit der vorliegenden Erfindung offenbarten Verfahrens können unmittelbar durch einen Hardware-Prozessor vollständig durchgeführt werden oder mittels einer Kombination der Hardware mit Softwaremodulen im Prozessor durchgeführt werden.

Der Speicher kann einen Hochgeschwindigkeitsspeicher (Random Access Memory, RAM) und ferner einen nichtflüchtigen Speicher (Non-volatile Memory, NVM), beispielsweise mindestens einen Magnetplattenspeicher, umfassen.

Bei dem Bus kann es sich um einen Industry-Standard-Architecture (ISA)-Bus, einen Peripheral-Component-Interconnect (PCI)-Bus oder einen Extended-Industry-Standard-Architecture (EISA)-Bus usw. handeln. Die Busse können in einen Adressenbus, einen Datenbus, einen Steuerungsbus, usw. unterteilt werden. Zum Erleichtern der Darstellung sind die Busse in den Zeichnungen der vorliegenden Anmeldung nicht auf nur einen einzigen Bus oder eine einzige Art von Bussen beschränkt.

Durch die vorliegende Anmeldung wird ferner ein Computerprogrammprodukt bereitgestellt, das ein Computerprogramm umfasst, das bei seinem Ausführen durch einen Prozessor das obige Verfahren implementiert.

Durch die vorliegende Anmeldung wird ferner ein computerlesbares Speichermedium bereitgestellt, auf dem computerausführbare Anweisungen gespeichert sind. Wenn der Prozessor die computerausführbaren Anweisungen ausführt, kann das obige Verfahren implementiert werden.

Das oben erwähnte lesbare Speichermedium kann durch ein flüchtiges oder nichtflüchtiges Speichergerät eines beliebigen Typs, wie z. B. statisches Random-Access-Memory (SRAM), Electrically-Erasable-Programmable-Read-Only-Memory (EEPROM), Erasable-Programmable-Read-Only-Memory (EPROM), Programmable-Read-Only-Memory (PROM), Read-Only-Memory (ROM), magnetischen Speicher, Flash-Speicher, Magnetdiskette oder optische Disk, oder eine Kombination davon erzielt werden. Das lesbare Speichermedium kann ein beliebiges Medium sein, das von einem universellen oder dedizierten Computer zugegriffen werden kann.

Ein beispielhaftes lesbares Speichermedium kann mit einem Prozessor gekoppelt werden, so dass der Prozessor Informationen von dem lesbaren Speichermedium auslesen und darin Informationen schreiben kann. Selbstverständlich kann das lesbare Speichermedium auch ein Bestandteil des Prozessors sein. Der Prozessor und das lesbare Speichermedium können sich in einem anwendungsspezifischen integrierten Schaltkreis (Application Specific Integrated Circuit, kurz: ASIC) befinden. Selbstverständlich können der Prozessor und das lesbare Speichermedium auch als diskrete Komponenten in dem Gerät vorliegen.

Die Aufteilung der Einheiten stellt nur eine logische Funktionsteilung dar, wobei bei der tatsächlichen Implementierung andere Aufteilungsarten verwendbar sind, wobei beispielsweise mehrere Einheiten oder Komponenten miteinander kombinierbar oder in ein weiteres System integrierbar sind, oder wobei einige Merkmale weggelassen oder nicht durchgeführt werden können. Ferner können die angezeigten oder diskutierten gegenseitigen Kopplungen oder direkten Kopplungen oder Kommunikationsverbindungen eine indirekte Kopplung oder Kommunikationsverbindung über einige Schnittstellen, Einrichtungen oder Einheiten sein, und können elektrisch und mechanisch sein oder andere Formen annehmen.

Eine als separates Element erläuterte Einheit kann physikalisch getrennt oder physikalisch nicht getrennt sein, ein als Einheit angezeigtes Element kann eine physikalische Einheit oder keine physikalische Einheit sein, nämlich kann sie sich an einem Ort befinden oder auf mehreren Netzwerkeinheiten verteilt sein. Einige oder alle Einheiten darunter können gemäß den tatsächlichen Bedürfnissen ausgewählt werden, um den Zweck der Ausgestaltungen der vorliegenden Ausführungsbeispiele zu erzielen.

Außerdem können alle Funktionseinheiten in einzelnen Ausführungsbeispielen der vorliegenden Erfindung in eine Verarbeitungseinheit integriert sein, oder jede Funktionseinheit kann allein physisch existieren, oder zwei oder mehr als zwei der genannten Funktionseinheiten können in eine Einheit integriert sein.

Wenn die Funktion in Form einer Funktionseinheit der Software realisiert wird und als separates Produkt verkauft oder verwendet wird, kann sie in einem computerlesbaren Speichermedium gespeichert werden. Basierend auf diesem Verständnis kann der Teil der technischen Ausgestaltungen der vorliegenden Erfindung, der wesentlich ist bzw. zum Stand der Technik beiträgt, oder ein Teil dieser technischen Ausgestaltungen in Form eines Softwareprodukts ausgeführt sein, das auf einem Speichermedium gespeichert ist und einige Anweisungen enthält, um ein Computergerät, das ein Personalcomputer, ein Server oder ein Netzwerkgerät usw. sein kann, zu veranlassen, alle oder einen Teil der Schritte des Verfahrens in verschiedenen Ausführungsbeispielen der vorliegenden Erfindung durchzuführen. Das oben erwähnte Speichermedium umfasst USB-Stick, mobile Festplatte, Nur-Lese-Speicher (ROM, Read-Only Memory), Direktzugriffsspeicher (RAM, Random Access Memory), Magnetplatte oder optischer Speicher und andere Medien, die die Programmcodes speichern können.

Durchschnittsfachleute können verstehen, dass alle oder einige der Schritte für jeweilige oben beschriebene Verfahrensausführungsbeispiele durch ein Programm über Anweisungen an relevante Hardware umgesetzt werden können. Das vorangehende Programm kann in einem computerlesbaren Speichermedium gespeichert sein. Beim Ausführen des Programms werden Schritte, die die jeweiligen oben beschriebenen Verfahrensausführungsbeispiele umfassen, ausgeführt. Das vorangehende Speichermedium umfasst: ROM, RAM, Diskette oder optische Disk und verschiedene andere Medien, in denen Programmcodes gespeichert werden können.

Abschließend sei darauf hingewiesen, dass für die Fachleute nach dem Implementieren der hierin offenbarten Erfindung unter Berücksichtigung der Beschreibung andere Ausführungsmöglichkeiten der vorliegenden Erfindung naheliegend sind. Die vorliegende Erfindung zielt darauf ab, jegliche Varianten, Verwendungen oder adaptive Änderungen der vorliegenden Erfindung abzudecken, und solche Varianten, Verwendungen oder adaptive Änderungen folgen den allgemeinen Prinzipien der vorliegenden Erfindung und umfassen allgemein bekanntes Fachwissen oder gewöhnliches technisches Mittel, das in der vorliegenden Erfindung nicht offenbart ist, auf diesem Gebiet. Die vorliegende Erfindung ist nicht auf die oben beschriebenen und in den Figuren dargestellten genauen Strukturen beschränkt und kann auf verschiedene Weisen modifiziert bzw. verändert werden, ohne von ihrem Umfang abzuweichen. Der Umfang der vorliegenden Erfindung ist lediglich durch die beigefügten Ansprüche definiert.

## Patentansprüche

1. Verfahren zur Fahrzeugsteuerung mittels Fahrassistenz, **dadurch gekennzeichnet, dass** es umfasst:
Erfassen von Fahrinformationen eines Fahrzeugs und Straßeninformationen aus der Umgebung des Fahrzeugs, wobei die Fahrinformationen einen Fahrzustand des Fahrzeugs charakterisieren, und wobei zu den Straßeninformationen zumindest eins von der Straßenkrümmung und dem Haftungskoeffizienten der Straßenoberfläche gehört;
Bestimmen einer ersten Steuerinformation und einer zweiten Steuerinformation einer Eingabevorrichtung im Fahrzeug basierend auf den Fahrinformationen und den Straßeninformationen, wobei die erste Steuerinformation eine obere Grenze für eine durch einen Benutzer an der Eingabevorrichtung ausführbare Betätigung charakterisiert, wobei die zweite Steuerinformation eine dem Benutzer empfohlene Betätigung der Eingabevorrichtung charakterisiert, und wobei zu der Eingabevorrichtung zumindest eins von einem Lenkrad, einem Fahrpedal und einem Bremspedal gehört; und
Bestimmen einer Ziel-Steuerinformation der Eingabevorrichtung basierend auf der ersten Steuerinformation und der zweiten Steuerinformation der Eingabevorrichtung, wobei die Ziel-Steuerinformation eine optimale Betätigung der Eingabevorrichtung durch den Benutzer charakterisiert, und wobei die Ziel-Steuerinformation dazu dient, den Benutzer bei der Betätigung der Eingabevorrichtung im Fahrzeug anzuleiten.

2. Verfahren nach Anspruch 1, **dadurch gekennzeichnet, dass** an einem Fahrgestell des Fahrzeugs ein Aktuator angebracht ist, wobei der Aktuator dazu dient, basierend auf einer durch die Eingabevorrichtung empfangenen Benutzerbetätigung das Fahren des Fahrzeugs zu steuern, und wobei das Bestimmen der ersten Steuerinformation der Eingabevorrichtung im Fahrzeug basierend auf den Fahrinformationen und den Straßeninformationen umfasst:
Erfassen von vorgegebenen Grenzinformationen des Aktuators, wobei die vorgegebenen Grenzinformationen einen Nenn-Drehmomentbereich des Aktuators charakterisieren; und
Bestimmen der ersten Steuerinformation der Eingabevorrichtung basierend auf den Fahrinformationen, den Straßeninformationen und den vorgegebenen Grenzinformationen.

3. Verfahren nach Anspruch 2, **dadurch gekennzeichnet, dass** das Bestimmen der ersten Steuerinformation der Eingabevorrichtung basierend auf den Fahrinformationen, den Straßeninformationen und den vorgegebenen Grenzinformationen umfasst:
Bestimmen von zulässigen Grenzinformationen des Aktuators basierend auf den Fahrinformationen, den Straßeninformationen und den vorgegebenen Grenzinformationen, wobei die zulässigen Grenzinformationen ein zum aktuellen Zeitpunkt zulässiges maximales Drehmoment des Aktuators charakterisieren; und
Bestimmen der ersten Steuerinformation der Eingabevorrichtung basierend auf den zulässigen Grenzinformationen des Aktuators.

4. Verfahren nach Anspruch 1, **dadurch gekennzeichnet, dass** das Bestimmen der zweiten Steuerinformation der Eingabevorrichtung basierend auf den Fahrinformationen und den Straßeninformationen umfasst:
Eingeben der Fahrinformationen und der Straßeninformationen in ein vorgegebenes Fahrzeugsteuermodell, um die zweite Steuerinformation der Eingabevorrichtung zu erhalten, wobei das vorgegebene Fahrzeugsteuermodell ein vorab trainiertes neuronales Netzwerkmodell ist, das dazu dient, basierend auf den Fahrinformationen und den Straßeninformationen die zweite Steuerinformation auszugeben.

5. Verfahren nach Anspruch 1, **dadurch gekennzeichnet, dass** das Bestimmen einer Ziel-Steuerinformation der Eingabevorrichtung basierend auf der ersten Steuerinformation und der zweiten Steuerinformation der Eingabevorrichtung umfasst:
Bestimmen eines Minimalwerts von der ersten Steuerinformation und der zweiten Steuerinformation der Eingabevorrichtung als die Ziel-Steuerinformation der Eingabevorrichtung.

6. Verfahren nach einem der Ansprüche 1 bis 5, **dadurch gekennzeichnet, dass** es ferner umfasst:
Erfassen einer Ist-Steuerinformation der Eingabevorrichtung durch den Benutzer, wobei die Ist-Steuerinformation eine Ist-Betätigung der Eingabevorrichtung durch den Benutzer charakterisiert; und
Senden der Ziel-Steuerinformation und der Ist-Steuerinformation an ein Armaturenbrett des Fahrzeugs zur Anzeige basierend auf einer vorgegebenen Informationsanzeigeform.

7. Verfahren nach Anspruch 6, **dadurch gekennzeichnet, dass** es ferner umfasst:
Bestimmen einer Differenz zwischen der Ist-Steuerinformation und der Ziel-Steuerinformation; und
Ausgeben einer Warninformation auf dem Armaturenbrett des Fahrzeugs, wenn die bestimmte Differenz innerhalb eines vorgegebenen Differenzbereichs liegt, wobei die Warninformation den Benutzer darauf hinweist, die Betätigung der Eingabevorrichtung abzuschließen.

8. Verfahren nach Anspruch 6, **dadurch gekennzeichnet, dass** es sich bei der Eingabevorrichtung um ein Lenkrad handelt, wobei die Ist-Steuerinformation einen Ist-Drehwinkel des Lenkrads unter Steuerung des Benutzers und die Ziel-Steuerinformation einen optimalen Drehwinkel des Lenkrads unter Steuerung des Benutzers charakterisiert, und wobei das Verfahren ferner umfasst:
Aufbringen eines Gegendrehmoments vorgegebener Größe auf das Lenkrad, wenn die Ist-Steuerinformation größer als die Ziel-Steuerinformation ist, wobei das Gegendrehmoment den Benutzer darauf hinweist, das Drehen des Lenkrads zu stoppen.

9. Verfahren nach Anspruch 6, **dadurch gekennzeichnet, dass** es sich bei der Eingabevorrichtung um eine Pedalvorrichtung, die ein Fahr- oder Bremspedal ist, handelt, wobei die Ist-Steuerinformation eine Ist-Stellung der Pedalvorrichtung unter Steuerung des Benutzers und die Ziel-Steuerinformation eine optimale Stellung des Lenkrads und der Pedalvorrichtung unter Steuerung des Benutzers charakterisiert, und wobei das Verfahren ferner umfasst:
Aufbringen eines Pedalwiderstands vorgegebener Größe auf die Pedalvorrichtung, wenn die Ist-Steuerinformation größer als die Ziel-Steuerinformation ist, wobei der Pedalwiderstand den Benutzer darauf hinweist, das Treten der Pedalvorrichtung zu stoppen.

10. Vorrichtung zur Fahrzeugsteuerung mittels Fahrassistenz, **dadurch gekennzeichnet, dass** sie umfasst:
eine Erfassungseinheit, zum Erfassen von Fahrinformationen eines Fahrzeugs und Straßeninformationen aus der Umgebung des Fahrzeugs, wobei die Fahrinformationen einen Fahrzustand des Fahrzeugs charakterisieren, und wobei zu den Straßeninformationen zumindest eins von der Straßenkrümmung und dem Haftungskoeffizienten der Straßenoberfläche gehört;
eine Bestimmungseinheit, zum Bestimmen einer ersten Steuerinformation und einer zweiten Steuerinformation einer Eingabevorrichtung im Fahrzeug basierend auf den Fahrinformationen und den Straßeninformationen, wobei die erste Steuerinformation eine obere Grenze für eine durch einen Benutzer an der Eingabevorrichtung ausführbare Betätigung charakterisiert, wobei die zweite Steuerinformation eine dem Benutzer empfohlene Betätigung der Eingabevorrichtung charakterisiert, und wobei zu der Eingabevorrichtung zumindest eins von einem Lenkrad, einem Fahrpedal und einem Bremspedal gehört; und
eine Steuereinheit, zum Bestimmen einer Ziel-Steuerinformation der Eingabevorrichtung basierend auf der ersten Steuerinformation und der zweiten Steuerinformation der Eingabevorrichtung, wobei die Ziel-Steuerinformation eine optimale Betätigung der Eingabevorrichtung durch den Benutzer charakterisiert, und wobei die Ziel-Steuerinformation dazu dient, den Benutzer bei der Betätigung der Eingabevorrichtung im Fahrzeug anzuleiten.

11. Elektronisches Gerät, **dadurch gekennzeichnet, dass** es einen Speicher und einen Prozessor umfasst,
wobei in dem Speicher computerausführbare Anweisungen gespeichert sind,
und wobei der Prozessor die in dem Speicher gespeicherten computerausführbaren Anweisungen ausführt, um zu bewirken, dass der Prozessor ein Verfahren nach einem der Ansprüche 1 bis 9 durchführt.

12. Computerlesbares Speichermedium, **dadurch gekennzeichnet, dass** auf dem computerlesbaren Speichermedium computerausführbare Anweisungen gespeichert sind, die bei ihrem Ausführen durch einen Prozessor zur Implementierung eines Verfahrens nach einem der Ansprüche 1 bis 9 verwendet werden.

13. Computerprogrammprodukt, **dadurch gekennzeichnet, dass** es ein Computerprogramm umfasst, das bei seinem Ausführen durch einen Prozessor ein Verfahren nach einem der Ansprüche 1 bis 9 implementiert.
